# EUROPEAN PATENT APPLICATION

(11) **EP 2 854 202 A1**
(43) Date of publication of application: **01.04.2015**
(21) Application number: 14185014.9
(22) Date of filing: 16.09.2014
(51) Int. Cl.: H01M 4/131, H01M 4/505, H01M 4/525, H01M 4/62

(54) **Dispersant for improved battery electrode formulations**

(30) Priority: 24.09.2013 US 201314034855
(71) Applicant: Palo Alto Research Center Incorporated, Palo Alto, California 94304 (US)
(72) Inventor: Rao, Ranjeet, Palo Alto, CA 94304 (US); Bae, Chang-Jun, Palo Alto, CA 94304 (US)
(74) Representative: Lord, Michael

(57) **Abstract**

A composition includes an active material, a conductive agent, lithium dodecyl sulfate, a solvent, and an organic binder.

## Description

### BACKGROUND

The predominant manufacturing method for mass production of lithium ion battery electrodes involves a process referred to as slot coating, a roll-to-roll process. The substrate, also referred to as a carrier, generally consists of a thin metal foil, typically aluminum for cathodes or copper for anodes. A series of rollers and tensioners guides the carrier through the coating machine at the proper speed and flatness. Deposition of ink or slurry takes place at a particular roller called the backing roller. At the backing roller, the foil makes a sharp turn, placing sufficient tension on the roller to provide a good surface for deposition. The slot die is placed in close proximity to the substrate, and ink flows through the die to deposit on the metal foil as it moves past the die. Typical coating speeds are in the range of 1 to 20 meters per minute.

After the coating process is complete, the film passes through a dryer to remove the solvent. After drying, a slitter cuts the coated foil into narrower strips, which are calendered to reduce thickness variation and increase the film density. The film may also be further treated under vacuum and heat to remove any latent water. Both the cathode and anode electrodes are made in this fashion. Eventually, the cathode electrode film is combined with a separator and the anode film to produce a battery.

Due to the nature of the slot coating process, careful control of ink rheology is necessary to achieve a high quality electrode film. Any inhomogeneity in the slurry will result in a film with an inconsistent thickness. This has a negative effect on the battery after assembly. The slurries typically consist of either aqueous or non-aqueous formulations. In the past, non-aqueous formulations had preference because water is a contaminant in the final product and had to be removed through drying and vacuum treatment. However, due to stricter rules on the release and disposal of chemicals, the battery industry has begun to favor the use of water, since there is no need for solvent recovery after evaporation.

Non-aqueous cathodes slurries typically have four main components: an active material, such as lithium cobalt oxide, lithium iron phosphate, etc.; carbon black; polyvinylidene fluoride (PVDF); and N-Methylpyrrolidone (NMP), a polar solvent. A non-aqueous anode slurry has similar components except that the active material consists of mesoporous graphite instead of a lithium containing compound. Generally, aqueous solutions are only used on the anode side. Aqueous formulations typically include graphite material; carbon black; carboxymethylcellulose; and styrene butadiene rubber (SBR).

Manufacturers must be very careful when adding components to the formulation, because any additional components may inadvertently reduce battery lifetime. For example, incompatible species in the electrolyte may oxidize upon discharge and over time plate the anode surfaces, inhibiting lithium ion movement. A processing aid that is added to the formulation to improve the rheology of the ink or slurry in the wet state will then worsen the electrochemical performance in the dried state. For this reason, battery manufacturers do not use dispersants in the slurry formulations.

Dispersants are additives that improve the stability of particle suspensions, where stability refers to the tendency for particles to aggregate in the solvent. Unstable suspensions contain particles that have a tendency to aggregate with one another, often resulting in thickening of the fluid or sedimentation. Stable suspensions, on the other hand, have particles that are either non-interacting or repulsive, such that the particles remain separate. Increasing suspension stability can improve printing and coating behavior by making the coating more homogenous. Conventional battery production may not rely upon dispersants as heavily because conventional battery slurries are of relatively low solids content, and thus particle-particle interactions are reduced. As particle loading in the slurry is increased, viscosity increases exponentially, and the need for dispersants is greater.

### DETAILED DESCRIPTION OF THE EMBODIMENTS

Conventional battery production typically relies upon inks with low viscosity, on the order of 1 - 1000 mPa-s. Typically, these inks are approximately 20 volume% solid particles such as an active material and conductive agent like carbon black. For co-extrusion applications, higher solids loading and viscosity is generally desired, so the use of dispersants is warranted to increase ink homogeneity, reduce clogging and improve printability. Without a dispersant, or too little dispersant, the printed or co-extruded film may contain printing defects that affect final device performance. For example, a pinhole defect in the electrode caused by insufficient ink coverage can result in an electrical short in the final battery.

One factor in dispersant selection is compatibility with the intended electrolyte. In experiments, it was discovered that after combining certain dispersants with an electrolyte, such as a mixture of organic carbonates for lithium ion battery systems, they eventually reacted and turned the electrolyte from clear to a brown color, indicating that some reaction was taking place. In some cases, this reaction is immediate, while in other cases, this reaction only manifested after multiple days had elapsed. One dispersant, lithium dodecyl sulfate (LDS), was discovered that did not show any visible deterioration in the electrolyte. More importantly, addition of LDS improved the resulting electrode performance. For both anodes and cathode electrodes, ink compositions with LDS showed higher charge capacity over a range of charge/discharge rates compared to inks without LDS. LDS has a further advantage in that it is a surfactant that is soluble in both aqueous and non-aqueous solvents, making it possible for use in a wider variety of formulations.

LDS can be used in both cathode and anode formulations. A general composition of either type of electrode consists of an active material, a conductive additive, LDS and an organic medium. In some embodiments, the electrode is a cathode and the active material is a lithium containing compound. One should note that the compounds may take different formulations, so the more general names for them will be used.. For example, lithium nickel manganese cobalt oxide (NMC) can be described by the chemical formula LiNiₓMn_{y}Co_{z}O₂, where x+y+z = 1. In some cases, the amount of Ni, Mn, and Co in the compound is equal, i.e. x = y = z = 1/3. In other cases, the compound may be nickel-rich, or manganese-rich, or cobalt-rich, depending on the specific properties desired. We refer to the entire class of compounds when we use the term NMC. Other examples of lithium containing compounds include lithium cobalt oxide (LCO), such as LiCoO₂, lithium manganese oxide (LMO) such as LiMn₂O₄, lithium iron phosphate (LFP) LiFePO₄, and lithium nickel cobalt aluminum oxide (NCA) such as LiNiₓCo_{y}Al₂O₂. These formulas are just examples and are not intended to limit the type of active material used for the battery electrode.

Another component of the composition is a conductive agent. This increases the conductivity of the dried electrode film. Examples include carbon black, acetylene black, graphene, and graphite. Concentrations may vary for the conductive agent, especially in the slurry form. A composition may be defined by the concentration of each of the component species in the wet slurry. Alternately, a composition may be defined by the concentration of each component in the dried film, e.g. after drying and removal of solvent. Since the electrode film is dried in such a manner before being assembled into a battery, the latter definition can be helpful insomuch that it defines the electrode composition regardless of the quantity and type of solvent used..

In addition to the active component, the conductive agent and LDS, the composition may include an organic medium. The organic medium may include a binder and/or a solvent. Examples of the binder may include polyvinylidene fluoride (PVDF), styrene-butadiene rubber, and carboxymethylcellulose. Examples of the solvent may include N-Methyl pyrrolidone (NMP), N, N-dimethylformamide (DMF), Dimethyl sulfoxide (DMSO), and Tetrahydrofuran (THF).

In one embodiment, a cathode composition may have 68.16 wt% NMC, 3.72 wt% carbon black, 0.36 wt% LDS, 2.53 wt% PVDF, and 25.23 wt% NMP. Battery manufacturers may use a conventional slurry formulation, such as46 %wt active, 3.5 wt% carbon black, 4.5 wt% PVDF, and 46 wt% NMP. In one embodiment, an anode composition may have 59.1 wt% graphite, 1.9 wt% carbon black, 0.3 wt% LDS, 3.9 wt% PVDF, and 35.8 wt% NMP. An example of a conventional anode composition is 36.7 wt% graphite, 1.6 wt% carbon black, 6.5 wt% PVDF, and 55.1 wt% NMP. Again, these concentrations can also be defined relative to the dried film, so it does not matter how much solvent is added during the production process. This gives more leeway in the production process. A range of percentages for the resulting dried film may be 75 - 98 %wt active material, 0-20 wt% conductive agent, 0 - 10 wt% binder, and 0.1 - 10 wt% LDS. Since the film is dried, the solvent no longer exists. This general formulation applies for both anode and cathode ink formulations.

The same general formulation may be used for anodes. The active material for anodes will typically comprise one of carbon, graphite, silicon, silicides, graphene, lithium titanate (LT), titania, and transition metal oxides. Typically, anode slurries are aqueous and therefore use water as the solvent. However, no limitation to an aqueous slurry for anodes is intended and none should be implied. It is possible that non-aqueous solvents may be used in anode slurries.

Cathode and anode formulations can be prepared via a number of different methods. One possible set of processing steps can be described as follows. First, add the active material powder to a solution of solvent and dispersant, and mix or stir until homogeneous. Next, dissolve the binder into the solvent, using a combination of elevated temperature and agitation/mixing. Finally, add the conductive particles until the suspension is homogeneous. Alternately, one could dissolve the binder into the solvent and dispersant, and subsequently add the conductive particles and active materials to the viscous fluid formed. The disadvantages and advantages of each process will depend on the nature of the constituent ingredients, and will be familiar to one skilled in the art.

In this manner, more viscous slurries may be used in electrode formation. The higher viscosity would typically result in films that are not smooth and do not flow evenly in an extrusion application. However, the addition of a dispersant to the composition allows for more stable slurries with even distribution of the active material and better results for extrusion applications.

It will be appreciated that several of the above-disclosed and other features and functions, or alternatives thereof, may be desirably combined into many other different systems or applications. Also that various presently unforeseen or unanticipated alternatives, modifications, variations, or improvements therein may be subsequently made by those skilled in the art which are also intended to be encompassed by the following claims.

## Claims

1. A composition, comprising:
an active material;
a conductive agent;
lithium dodecyl sulfate;
a solvent; and
an organic binder.

2. The composition of claim 1, wherein the active material comprises a cathode material containing lithium.

3. The composition of claim 1, wherein the active material comprises an anode material.

4. A composition, comprising:
an active compound containing lithium;
a conductive agent;
lithium dodecyl sulfate;
a solvent; and
an organic binder.

5. The composition of claim 4, wherein the solvent comprises water.

6. The composition of claim 4, wherein the solvent comprises an organic liquid.

7. The composition of claim 4, wherein the lithium containing compound comprises at least one of lithium cobalt oxide, lithium nickel manganese cobalt oxide, lithium iron phosphate, lithium manganese oxide, lithium nickel cobalt aluminum oxide.

8. The composition of claim 4, wherein the conductive agent comprises at least one of carbon black, acetylene black, graphene and graphite.

9. The composition of claim 4, wherein the binder comprises at least one of polyvinylidene fluoride, styrene-butadiene rubber, and carboxymethylcellulose.

10. A composition, comprising:
an anode active material;
a conductive agent;
lithium dodecyl sulfate;
a solvent; and
an organic binder.
